# EUROPEAN PATENT APPLICATION

(11) **EP 3 141 111 A2**
(43) Date of publication of application: **15.03.2017**
(21) Application number: 16187832.7
(22) Date of filing: 08.09.2016
(51) Int. Cl.: A01K 61/60, A01K 61/80, A01K 61/13

(54) **SYSTEM AND METHOD FOR REMOVING EXTERIOR PARASITES FROM FISH AND FISH FEEDING SYSTEM AND METHOD**

(30) Priority: 08.09.2015 DK 201570579
(71) Applicant: SP/F Frama, Klaksvik 700 (FO)
(72) Inventor: JENSEN, Bogi Bech, 700 Klaksvik (FO); SØRENSEN, Tróndur, 700 Klaksvik (FO)
(74) Representative: Olesen, Birthe Bjerregaard

(57) **Abstract**

The present invention relates to a system (2, 102) for removing exterior parasites from fish, such as salmon lice (5), which system comprises one or more mostly closed volumes or pools of seawater (6, 106), where fish are kept inside by boundaries, such as nets surrounding the volumes. The object of the pending patent application is to remove parasites such as salmon lice by a natural method. The objects can be fulfilled by letting the closed volume comprise a sub volume of fresh water (8, 108), which fresh water sub volume is connected to a supply of fresh water (10), which fresh water sub volume has an open access for fish to swim into the fresh water sub volume. Hereby, it can be achieved that parasites such as salmon lice which have fastening them-selves to the skin of salmon by a suction plate are removed by contact with fresh water. In addition, a system for effectively feeding fish kept in closed volumes or pools of seawater, where fish are kept inside by boundaries fish which results in reduced waste of fish feed and increased fish growth and further in reduced eutrophication of the surrounding sea.

## Description

### Field of the Invention

The present invention relates to a system for removing exterior parasites from fish, such as salmon lice, which system comprises one or more mostly closed volumes or pools of seawater, where fish are kept inside by boundaries, such as nets surrounding the volumes.

The present invention also relates to a method for removing exterior parasites from fish, e.g. fish lice.

The present invention further relates to a feeding system for feeding fish in fish farms, such as salmon, which system comprises one or more mostly closed volumes or pools of seawater, where fish are kept inside by boundaries, such as nets surrounding the volumes.

The present invention also relates to a method for feeding fish in fish farms.

### Background of the Invention

Damage caused by salmon lice constitutes a large expense for fish farmers every year. Salmon lice are very widespread and traditional removal methods have led to several drawbacks.

Use of chemical and/or pharmaceutical agents, e.g., vaccination or feed additives, cause pollution and create a risk for undesirable side effects or long term adverse, e.g. species of salmon lice, which are resistant to the chemical and/or pharmaceutical agents.

Mechanical removal is too time consuming. The use of wrasse, which dine on the parasites is only effective on individual fish and cannot be carried out satisfactory on a large scale.

WO 98/24304 discloses a method for removal of exterior parasites from fish, especially salmon lice. The fish are led through a flow of water where it is exposed to nozzle water sprays from nozzle heads or nozzle slits. A device is provided for carrying out the procedure comprising four or more nozzles (20) or nozzle orifices, placed in a circle close to a pipe (12) within which the fish are guided, all nozzles being connected to a water pump.

NO 333846 B discloses a system for treating salmon infected with salmon lice. The system comprises a floating flexible container in which fresh water from a reverse osmosis plant is supplied. The bottom of the container can be raised gradually to force the fish into a less saline environment in the top of the container

WO 2012/148283 discloses another system for de-lousing fish, such as salmon, living in a fish farm, i.e. a net cage floating at open sea. The fish are pumped into a device, which separates the fish from the water. Then the fish are transported through a U-shaped treatment station, where they are treated with lukewarm water (approx. 30°C) and/or an aqueous solution of chemicals. The fish are pumped into another floating cage when they leave the treatment station.

### Object of the Invention

The object of the pending patent application is to remove parasites such as salmon lice by a natural method.

A further object of the pending patent application is to avoid use of chemicals when removing the parasites.

It is an even further object of the present invention to provide feeding means, which reduces the overall amount of fish feed used in fish farming and reduces the amount of fish feed which is wasted in the fish farming industry.

Thus it is also an object of the present invention to reduce the eutrophication caused by wasted fish feed to the surroundings of a fish farm, in particular to the sea surrounding fish farms.

### Description of the Invention

The objects can be fulfilled by a system as disclosed in the preamble to claim 1 and further modified by letting each of the closed volume comprise a sub volume of fresh water, which fresh water sub volume is connected to a supply of fresh water, which fresh water sub volume has an open access for fish to swim into the fresh water sub volume.

Hereby can be achieved that parasites such as salmon lice which have fastened themselves to the salmon, e.g. by a suction plate are removed by contact with fresh water.

A most surprising effect that has been observed is that early stage salmon sea lice can only live in normal salt water and they are being disturbed in their process of suction to the fish when the fish meet fresh water. Salmon can live as well at open sea in salt water and swim up in rivers and salmon fry and young salmon live the first long period of their life in fresh water rivers. Therefore, salmon have no difficulties in swimming into a fresh water stream.

By the pending application a fresh water sub volume is achieved inside a closure for salmon. If the fresh water sub volume has a continuous supply of fresh water, the salmon will probably search the fresh water supply by themselves. Preferably, the fresh water is supplied from a supply device which could be a tube leading maybe to a river or a lake where pumping means are generating fresh water. Alternatively the tube supplies fresh water from the public fresh water supply or a private fresh water generating plant. Another possibility is that around an open sea fish farm there is a tank, maybe submerged with fresh water from where fresh water is supplied to the fresh water sub volume. Fresh water can in that situation be delivered by ships which are filling the fresh water tanks. Alternatively, the fresh water can be produced at open sea by a floating desalination plant, which may e.g. be solar powered.

Because the salmon are able to live in fresh water as well as saline water, there is a relative high possibility that the salmon will try to reach the inlet for the fresh water sub volume and thereby automatically reach an environment where the salmon lice is trying to escape from the fresh water by reduction of their suction force and in that way be released from contact to the fish. It is possible that the salmons can learn that if they have felt salmon lice at their body they can swim into the fresh water and in that way get rid of the disturbing salmon lice Alternatively, the fish can be fed inside the volume of fresh water whereby they are at least partially de-loused every time they eat the feed, which is supplied into the sub volume of fresh water. By using fresh water when removing parasites such as salmon lice it is highly effective due to the fact that use of chemicals is avoided.

In order to avoid complete mixing of the fresh water and the surrounding seawater the opening in the closure, which surrounds the volume of fresh water, will be pointing downwards or mostly downwards. Thus the opening may also be angled up to approx. 45 deg. in relation horizontal position corresponding to the sea surface (in the ideal situation with no waves).

Further is avoided any mechanical treatment of salmon when removing salmon lice. Therefore the use of fresh water for removing salmon lice will probably be much more effective and much cheaper than any of the preceding methods for removing salmon lice. Further, there is no negative effect on the salmon as such and at this moment salmon can only be treated by hydrogen peroxide when removing salmon lice. This hydrogen peroxide is relative dangerous to use because a small percentage of treated fish are dying during or after the treatment and lately the Hydrogen peroxide treatment may result in lice developing resistance to hydrogen peroxide treatment, which is seen in some fish farms in Norway. In addition, fish treated with hydrogen peroxide tend to lose their appetite during and for a while after the hydrogen peroxide treatment, which is avoided with the method and system of the present invention. Also the cost of the hydrogen peroxide together with a number of dead salmon gives the fish farmer relatively large economic impact by using that method in reduced production and increased costs related to the hydrogen peroxide. Therefore, the fresh water method is highly effective and economical in use in relation to the known methods.

In a preferred embodiment of the invention the system comprises means for adding feed into the fresh water sub volume. In order to achieve that all salmon swim into the fresh water sub volume they will more or less be forced to swim into the fresh water sub volume if feeding is performed in the fresh water sub volume. Therefore it is achieved that when the fish is eating, the salmon lice are also removed from their body. Feeding in the fresh water sub volume will thereby automatically increase the effectiveness of the system and further eliminate or at least significantly reduce problem with lice in population of fish in the fish farm.

In a further preferred embodiment for the invention the fresh water sub volume can be formed inside a tube, which tube can comprise at least one downwards pointing open inlet, which tube is connected to a source of fresh water. Using a tube can result in salmon swimming inside the tube in order to spend at least a period of time in the tube before they leave the tube again. Probably the salmon will swim against the water flow especially if fresh water is added to the tube. Fresh water will by itself stream upwards because lower density than seawater with a salt content. Thereby can be achieved that the salmons swim upwards which at the same time change the pressure around the salmon. A pressure reduction around a salmon will by itself reduce the suction force generated by the salmon lice for keeping them fastened to the salmon. Therefore, already by upwards movement of the salmon some effect is achieved. Further effect is achieved when fresh water surrounds the salmon and the salmon lice will automatically lose its low pressure connection to the salmon. Fresh water is probably so dangerous for early stage salmon lice that many of the salmon lice are pacified and thus detach themselves from the fish if they have to spend more than a few minutes in the fresh water.

In a further preferred embodiment for the invention the tube can be formed as a horizontal oriented coil, which coil comprises a first and a second down pointing inlet/outlet, which coil comprises a fluid connection for supply of fresh water. Hereby can be achieved, that a tube can have a relative long length, and the inlet and/or outlet legs may extend. several meters, e.g. up to 10-15 m or maybe more, downwardly into the sea , but still only filling a small volume inside a sea water volume for salmon. Because the coil as two openings both pointing downwards can be achieved that the fresh water inside is mostly being kept inside the coil. The constant addition of fresh water to the fresh water sub volume will cause a slight mixture with the surrounding saline sea water in the area of the opening or openings and thus build a salt concentration gradient which resembles the gradient in the area where the a river meets the sea.

This may encourage the fish, in particular salmon, to enter the fresh water sub volume. This concentration gradient results in that water in the coil windings is fresh water. An inlet of fresh water is present at the top of the coil where one or more inlets can exist. The inlet can be directed so that a water stream is generated in one direction in the coil and in that way maybe generating a fish inlet in the one end of the coil and a fish outlet in the other end because the fish will either swim with the stream or alternatively against the stream. Tests with young salmon individuals have shown that the fish instinctively with the stream to try to "hunt" particles of circulating feed, which are suspended in the flow of circulating water.

Of course it is possible together with the inlet of fresh water also to add feed so that feeding is performed inside the coil. The coil solution seems highly effective in fish farms where a number of coils could be used depending of the size of the fish farm. Typically a fish farm will have a number of volumes probably formed by nets where fish in different sizes are living. Therefore, it could be highly effective if one or more of the coils are present in each of the nets. Alternatively one or more coils may connect two adjacent floating nets, and the fish will thus be moved from one net to the other when passing through the coil(s).

It is possible to control the supply of fresh water into the compartment surrounding the fresh water volume, such as the above mentioned coil or the bell or dome system discussed below, by detecting the salinity in the fresh water chamber e.g. by conductivity measurements or similar well known ways to detect the salt concentration in water.

In a further preferred embodiment for the invention the inner volume can be formed as a bell or dome shaped compartment (in the following just mentioned as a dome), which bell is open downwards, which bell comprises fresh water, which fresh water is delivered from a fresh water source. By using a bell shaped volume it is possible that the fresh water automatically will be inside the bell which is opened downwards. Of course there will be a mostly continuous supply of fresh water to the bell in order to avoid a thorough mixture of fresh water with sea water inside the bell, generated when fish swim in and out. Therefore, by using a bell it will probably be necessary to have a fresh water supply in form of a tube to a fresh water source such as a river or another natural fresh water source such as a lake or as described above. The bell can be floating inside the seawater volume and the bell can be carried mostly by itself simply because the lower density of the fresh water will generate an upward force at the bell in relation to the surrounding sea water. Of course it is possible to adjust the position of the bell by floating means and by having a kind of ballast at the bell and/or by supplying an airspace in the top of the bell.

In a further preferred embodiment for the invention the bell can be connected to a tube, which tube has an inlet and an outlet inside the bell, which tube can comprise an inlet for fresh water. The combination of as well the bell and a tube that is starting and ending in the bell increase the total volume of fresh water and for all fish swimming into the tube they will automatically stay for a longer period in the fresh water before they return from the tube back into the fresh water bell formed volume. If the tube somewhere in the tube comprises an inlet for fresh water and this fresh water inlet has an orientation in one of the directions and there can be generated an injector effect in the flow of fresh water in the tube, where it sucks water from the bell, circles it through the tube and back towards the bell. Probably the fish will start swimming in the flow of water, especially if some feeding is performed, e.g. in the tube, near the inlet of fresh water or the like so that the feed circulates with the fresh water through the tube and the bell, the fish will automatically start swimming through the tube. Therefore, the fish stays for a longer period in the fresh water and thereby probably all parasites such as salmon lice will be forced by the fresh water to reduce their low pressure suction on the fish because the environment in the fresh water sub volume is probably so harsh to the salmon lice that most of the salmon lice will be pacified and detach themselves from the fish after the fish have spent a few minutes in the fresh water sub volume.

In a further preferred embodiment for the invention the bell can comprise an air volume above the fresh water sub volume, which system can comprise an air pump for pumping air from the air volume towards an air distribution tube for forming air bubbles in the fresh water sub volume inside the bell, which air pump by a shifting valve means further can generate air flow into a floating closure for closing the opening of the bell. Hereby upstreaming can air bubbles generate an upwards going flow of fresh water inside the bell. In addition, the stream of air bubbles can cause a slight mechanical action on the fish inside the fresh water sub volume whereby more or less pacified lice may be forced to detach themselves from the fish. Probably the stream of air bubbles will also transport the now free flowing salmon lice more or less in the direction of the surface of the water. The water pump can have a further function by a shifting valve so that a closure for the bell which is placed below the bell can be water filled at least in a floating ring around the closure which in this way performs a closing of the bell downwards. In that way can be performed that the fish that are staying in the bell have to spend a sufficient time in the bell before they are allowed to swim out.

When installing the bell in the fish farm net or similar boundary means, the air volume in the top of the bell may cause the bell to float on the surface of the sea. If then the air volume is subjected to a pressure reduction, e.g. by suction of the air by means of a pump or similar means, the pressure in the air volume reduces and causes the water inside the bell to rise above the sea surface in the bell.

In a further preferred embodiment for the invention the system can comprise a water pump for generating fresh water circulation in the bell which water pump further collect air bubbles in the fresh water and generates a stream of air bubbles in the upper part of the fresh water sub volume. Hereby, it can be achieved that a combination of air bubbles and the water flows inside the bell, which can have further positive effect in removing parasites such as salmon lice from salmon. Probably the detached parasites, which are present in the system where a combination of air bubbles and streaming water, will be forced to the surface of the fresh water inside the bell.

In a further preferred embodiment for the invention the system can comprise means for collecting exterior parasites at the water surface in the bell and for removing collected exterior parasites through a tube. Collecting means such as an automatic brush that is brushing the surface of the water or maybe only a rubber arm swiping the surface can lead the salmon lice towards the opening of the suction tube where all parasites such as salmon lice are transported away through the tube and pumping means. Similarly, some of the dead lice may also settle on the bottom of the tube or a bottom closure of the bell as described above, which may also comprise means for removing dead lice. Hereby is achieved that all dead salmon lice and also those who still are alive are transported away from the fish farm and they can no longer do any harm.

The pending patent application further concerns a method for removing exterior parasites from fish, such as salmon lice from fish in fish farms where the fish are kept in a for the fish closed volume as previous disclosed, where the method comprises at least the following activities
a. prepare a fresh water sub volume,
b. let fish swim into a volume of fresh water,
c. feed the fish in the fresh water,
d. generate an air stream towards an air inlet for generating air bubbles in the fresh water cavity,
e. remove parasites from the fresh water sub volume.

Hereby is achieved that parasites can be removed without any mechanical treatment and without any chemical treatment. It is possible in this way to remove the parasites rather quickly so no salmons will be disturbed by salmon lice, because removing is more or less a continuous process because each time the salmon is swimming towards feeding, it will automatically come into the fresh water and if a few salmon lice has sucked themselves into place at the fish, they will leave the fish immediately. Therefore, by this invention it will be extremely environmentally friendly because energy supply is limited to the pumping of fresh water and no chemicals are used so the environment impact is very limited by the pending application.

The present invention also relates to a fish feeding system for fish farms, which system comprises one or more volumes or pools of seawater which are more or less closed, where fish are kept inside by boundaries, such as nets surrounding the volumes. The system is special in that the closed volume comprises a sub volume of water, which water sub volume is connected to a supply of water creating a current of water through the sub volume which water sub volume has an access opening for fish to swim into the water sub volume and further comprises means for adding fish feed to the water current in the water sub volume.

The water current inside the sub volume of water keeps the feed suspended in the water, whereby the amount of feed falling to the bottom of the boundaries before it is eaten by the fish is reduced significantly. This results in that the fish eats substantially all feed which is used to feed the fish and significantly less or even no feed ends up on the bottom of the boundaries where the fish, in particular salmon, do not eat it. This results in reduced expenses for fish feed in the fish farms and thus results in reduced overall production costs in fish farming, in particular when farming salmon at sea.

Feed ending up on the bottom of the fish nets in fish farms at sea also cause eutrophication of the sea. When all or mostly all of the fish feed is eaten by the fish, the eutrophication of the surrounding sea is reduced significantly and an overall improved water quality is expected in the fish farming area at sea.

In addition it has been observed that the fish prefer to eat the feed, which is suspended in the water flow when compared to feed which is dispensed to the fish nets by traditional spreading means. It is believed that the suspended feed resembles the natural food resources, which wild salmon eat, and thus triggers their hunting instincts. The result is that the fish, especially salmon, will be encouraged to eat more and thus will grow more quickly and thus provide an increased income to the fish farmer.

It is preferred that feeding is performed in fresh water in the water sub volume as discussed above, because this results in a simultaneous de-lousing and feeding of the fish

The water sub volume of the fish feeding system is preferably provided inside dome or a bell shaped compartment which is open downwards, and which comprises water, preferably fresh water, which is delivered from a water source.

The bell or dome shaped compartment is discussed above in relation to the delousing system, and the advantages are similar in the fish feeding system. The bell provided with the tube for circulating the water inside the bell, as described above and below in further detail, appears to work best in the feeding system according to the invention, because the feed can circulate infinitely from dome into tube, from tube into dome and so on without any significant loss of feed.

In addition the present invention relates to a method for feeding fish, such as salmon, in fish farms where the fish are kept in a more or less closed volume. The method comprising at least the following activities:
a. prepare a water sub volume, preferably a fresh water sub volume,
b. generate a water current in the water sub volume, which is sufficiently strong to keep fish feed suspended in the water sub volume
c. feed the fish feed into the water current in the water sub volume,
d. let fish swim into the sub water volume, and thus
e. feeding the fish in the water sub volume.

Hereby is also achieved the advantages described above in relation to the fish feeding system.

### Description of the Drawing

- Fig. 1: shows a possible embodiment for the invention.
- Fig. 2: shows an alternative embodiment to the fresh water sub volume.
- Fig. 3: discloses a sectional view seen from the top of an alternative embodiment for the system.
- Fig. 4: shows same embodiment as indicated in fig. 3, but now as a sectional view seen from the side.
- Fig. 5: shows an alternative embodiment to the previous disclosed figures.
- Fig. 6: discloses more or less the same technical features as indicated in fig. 5, but here the bell is submerged into the volume.
- Fig. 7: shows a variant of lice elimination means.

### Detailed Description of the Invention

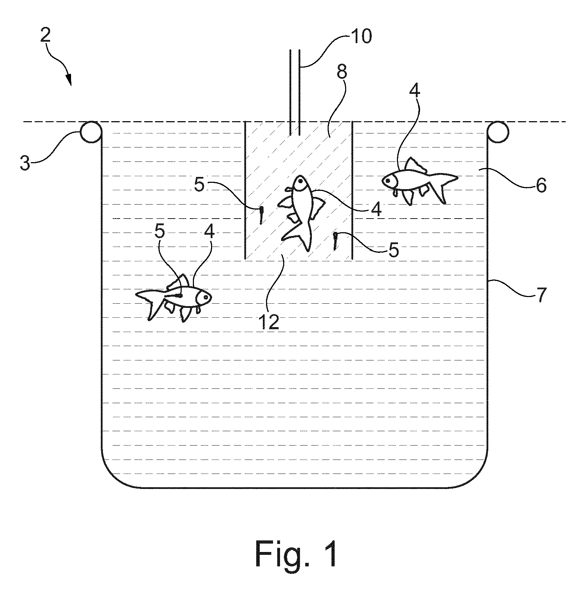

Fig. 1 shows a possible embodiment for the invention by indicating a system 2, which system comprises a seawater volume 6 surrounded by boundaries, such as a net 7, placed at open sea where fish 4 are kept inside the seawater volume 6. Inside the seawater volume 6 is indicated one further fresh water sub volume 8 containing fresh water, which is more or less continuous supplied through a supply tube 10. The fresh water sub volume 8 may be open towards the surface and is open downwards towards the surrounding seawater volume 6. The fish 4 carry parasites 5 such as salmon lice and if the fish 4 swim into the fresh water sub volume 8 of fresh water, the salmon lice 5, which attach themselves to the fish by suction, will lose their low pressure holding them attached to the surface of the fish. Some of the lice cannot live in the fresh water, therefore when they have lost their connection to the fish, they probably die in the fresh water.

The pending application shown in its most primitive form in fig. 1; it is possible to teach the salmon that if they are disturbed by salmon lice they will automatically swim up in the fresh water sub volume 8, because here the salmon lice will be released from the fish. Further can this effect be accelerated by performing feeding the fish in the fresh water sub volume 8. Hereby it can be achieved that the salmon will swim into the sub volume relatively often, and in that way they are continuously getting rid of salmon lice or at least some of the lice. This can be very important in a relatively large fish farm because salmon lice have the effect that the salmon growth rate is relatively slow in lice infected salmon and the previously known method for removing salmon lice is performed by using chemicals for treating the lice, which is expensive and not always as effective as expected. Many of the poisons or pharmaceuticals that have been used previously have no longer any effect on the salmon lice because the lice become resistant to the poisons or pharmaceuticals. Therefore, the fish farmers are now forced to use hydrogen peroxide for the delousing process. This is rather expensive and the peroxide is able to kill at least some of the salmon. Therefore, by the pending application even if it is operating as primitive as indicating at fig. 1, this will solve a very big problem for the fish farmers.

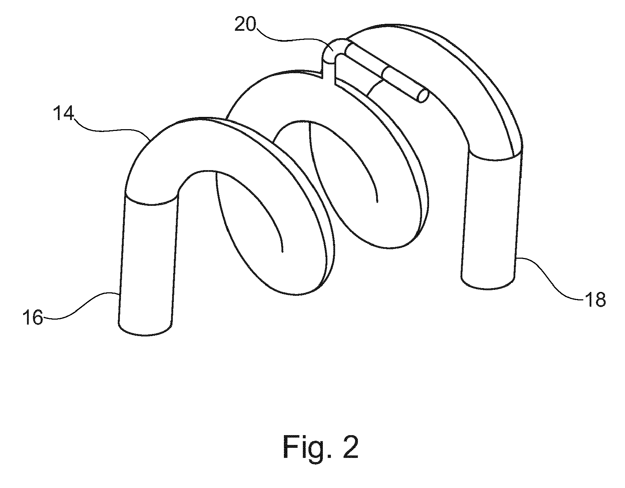

Fig. 2 shows an alternative embodiment to the fresh water sub volume 8. At fig. 2 is indicated a coil 14 having an inlet 16 and an outlet 18 and a tube 20 which is the fresh water supply. It is further possible together with the fresh water to add food into the coil. If any salmon swim into for example the inlet 16 they are forced to stay at least for a shorter period inside the fresh water in the coil before they maybe reach the outlet 18. Such coils 14 may be used to connect two otherwise separated nets 7 of farm fish. It is possible to have at least two coils 14, one where fish swim from net A to B and another coil 14 where the fish swim back from net B to A. In this case a "one-way-valve" (not shown) is provided on each coil 14, such that the fish can enter the coils 14 only in one direction.

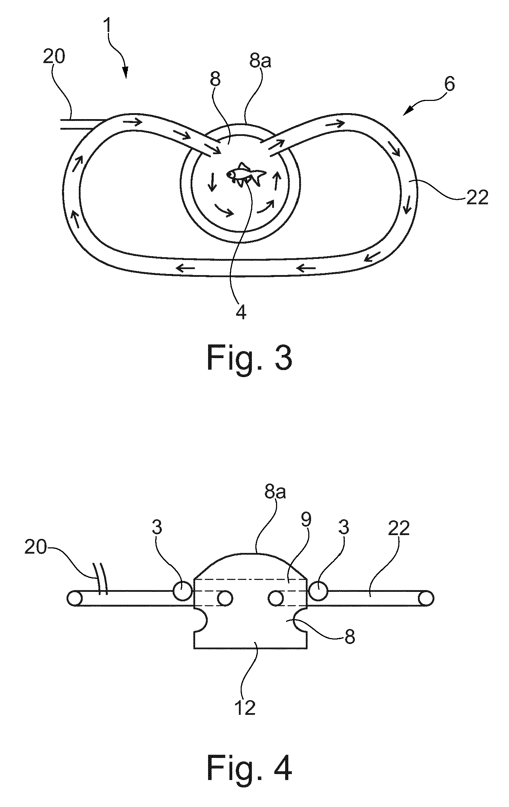

Fig. 3 discloses a sectional view seen from the top of an alternative embodiment for the system 2. The fresh water sub volume 8 is now formed as a bell or dome shaped compartment (in the following just called a bell) 8a and a tube 22. Further is indicated a fresh water inlet 20. The fresh water flows from the fresh water inlet 20 generating a circulation in the water flow due to the injector effect from the fresh water inlet at first in the tube 22, and then a circulation inside the bell 8a before the fresh water again leaves into the tube 22. Fish 4 that are entering the bell 8a will probably swim against the water streaming, especially if the fish are fed near the inlet of the fresh water. Therefore, fish starting to swim against the streaming in the tube 22 have to stay for at least a period which it takes them to swim through the whole tube 22. Therefore, during the relatively long period they are staying in the tube 22, most of the salmon lice are losing their low pressure holding force because some of the lice cannot live in fresh water. Therefore, when salmon as indicated by the fish 4 leave the bell 8 the salmon are probably not carrying any salmon lice any longer or at least the amount of lice on the fish 4 will be significantly reduced each time the fish 4 enters the sub volume of fresh water inside the bell.

Fig. 4 shows same embodiment as indicated in fig. 3, but now as a sectional view seen from the side. The bell 8a comprises fresh water 12. Further is indicated a swimming ring 3 probably air filled in order to have sufficient buoyancy for the bell 8a. Further is indicated a fresh water inlet to the tube 22. Further is indicated that there is an air volume above the fresh water 12.

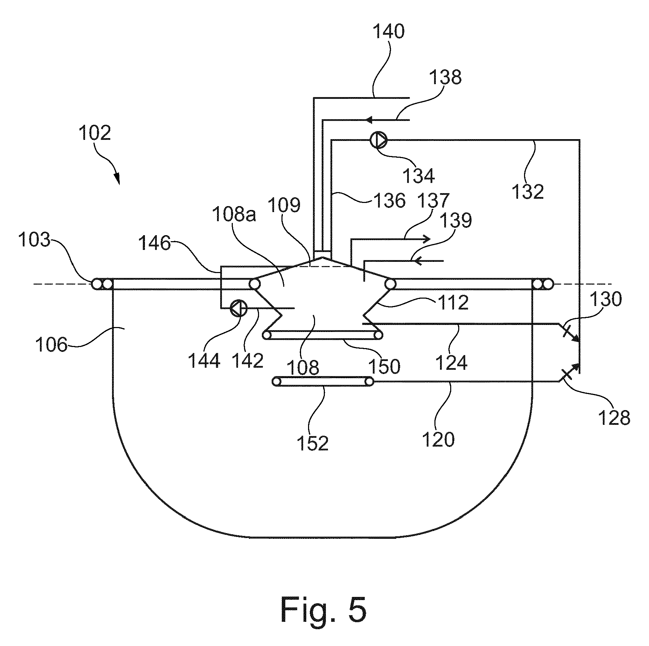

Fig. 5 shows an alternative embodiment to the previous disclosed figures. Fig. 5 shows a system 102 which system is floating by floating means 103 at open sea. The system comprises a net surrounding the volume 106 of seawater. Inside the volume 106 of sea water is indicated one further sub volume 108 in form of a bell 108a formed volume. This bell 108a contains fresh water 112. The fresh water 112 is optionally not filling the sub volume 108 totally, there may be an air volume above the fresh water 112 as indicated on fig. 5 by the dotted line 109. From the top of the bell 108a are indicated tubes or lines 138 indicates an inlet for feed, where 136 is an air tube connected to an air pump 134, which is further connected to a tube 132 down to switches 128 and 130. Thereby can air be delivered to a tube 124 for forming air bubbles inside the sub volume 108 or by a line 120 to a float 152, which also has a possibility of generating air bubbles. The float 152 can be filled more or less with air and thereby a closure can be formed because the float 152 is raised up to contact with the bell 108a. Further is indicated an electric communication line 140 which could be connected to a camera placed to observe the surface of the water inside the bell 108a. Further is indicated an outlet 137 which is the suction line which is used for removing salmon lice from the surface inside the bell 108a. Further is indicated an inlet 139 for fresh water. Line 142 is by water pump 144 performed suctions of water and maybe air bubbles if they are generated at the moment when the pump is operating into a line 146, which is ending near the surface of the bell 108a.

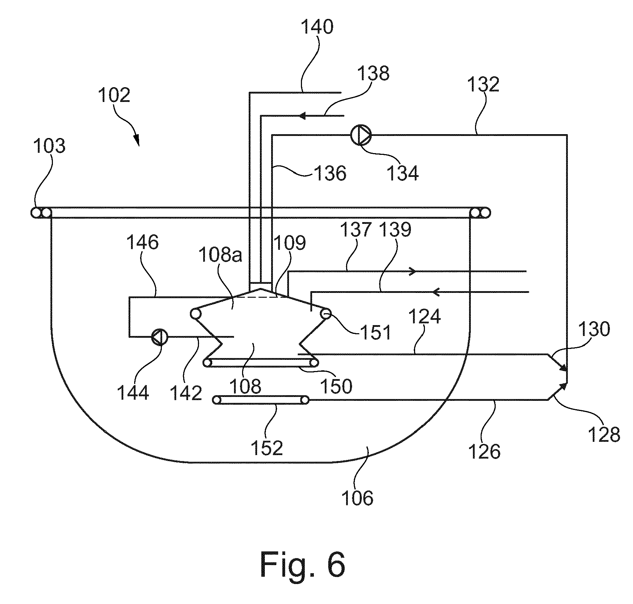

Fig. 6 discloses more or less the same technical features as indicated at fig. 5, but with the difference that the bell 108a is now submerged into the volume 106, as it thus becomes possible to get rid of the lice, as described above, at lower water levels as well. In that way it can also be achieved that salmon are swimming into the submerged bell 108a and afterwards the volume is closed by the float 152 and further air is pumped into for example float 152 and thereby raising the bell 108a with its content of fresh water and salmon up to a higher level in the water whereby the pressure inside the bell 108 is reduced. This reduction of pressure can further lead to that salmon lice are losing their suction force against the skin or scale of the salmon.

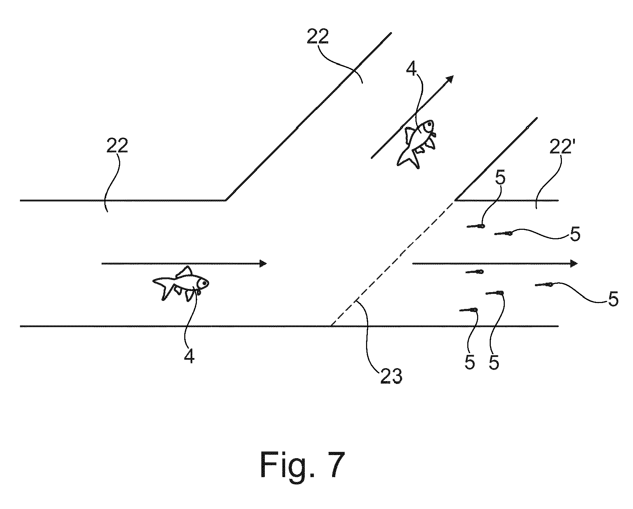

Fig. 7 illustrates an alternative way of eliminating the lice from the sub volume of fresh water. The tube 22 comprises a branch 22'through which some of the fresh water is withdrawn from the tube 22. The inlet to the branch is covered by screen 23, such as a net or a coarse filter. The screen 23has a pore size which allows the lice to pass through the screen 23, while the fish remain in the main tube 22. If feeding is provided in the circulating fresh water, the pore size in the screen 23 is preferably chosen so that the majority of the feed particles also remain in the main tube 22, while the lice pass through the screen 23. The fresh water which is withdrawn through the branch 22', may be subjected to further treatment, e.g. filtration, in order to collect the lice. The water is optionally recycled into the fresh water inlet 20.

By the pending application it is possible to get rid of one of the biggest problems for fish farming of salmon because salmon lice can in this way be reduced so there is more or less no negative effect of salmon lice in fish farming.

As already discussed above, the systems thus described can also be used for effectively feeding fish, especially salmon, in fish farms at sea and reducing the amount of wasted feed. The water supplied to the sub volume 8, 108 inside the tube 14 or bell 108a can be sea water and need not be fresh water in case the systems and methods are used for feeding purpose only. However in order to ensure proper buoyancy of the system in the sea water and in order to ensure proper delousing of the fish it is preferred that fresh water is provided in the inside the tube 14 or bell 108a.

Although the present invention is described in relation to treating or eliminating lice on salmon fish farms, e.g. it is of course also applicable for removing lice and other external parasites, on other species of fish bred in sea water.

## Claims

1. System (2,102) for removing exterior parasites from fish, such as salmon lice (5), which system (2,102) comprises one or more mostly closed volumes or pools of seawater (6,106), where fish (4) are kept inside by boundaries, such as nets surrounding the volumes (6,106), **characterized in, that** each of the closed volume(s) (6,106) comprise a sub volume of fresh water (8,108), which fresh water sub volume (8,108) is connected to a supply of fresh water (10), which fresh water sub volume (8,108) has an open access for fish to swim into the fresh water sub volume (8,108).

2. System (2,102) according to claim 1, **characterized in** comprises means for adding feed into the fresh water sub volume (8,108).

3. System (2,102) according to claim 1 or 2, **characterized in that** the fresh water sub volume (8,108) is formed inside a tube (14), which tube (14) comprises at least one downwards pointing open inlet (16,18) , which tube (14) is connected to a source of fresh water (20).

4. System (2,102) according to one of the claims 1-3, **characterized in that** the tube (14) is formed as a horizontal oriented coil, which coil comprises a first and a second down pointing inlet/outlet (16,18), which coil comprises a fluid connection for supply of fresh water (20).

5. System (2,102) according to claim 1 or 2, **characterized in that** the fresh water sub volume (8,108) is formed as a bell or dome (8a), which is open downwards, which bell or dome (8a) comprises fresh water, which fresh water is delivered from a fresh water source (20).

6. System (2.102) according to claim 5, **characterized in that** the bell (8a) is connected to a tube (22), which tube (22) has an inlet and an outlet inside the bell (8a), which tube (22) comprises an inlet for fresh water (20).

7. System (2,102) according to claim 5 or 6, **characterized in that** the bell (108a) comprises an air volume above the fresh water sub volume (108), which system (2,102) comprises an air pump (134) for pumping air from the air volume towards an air distribution tube (124) for forming air bubbles in the fresh water sub volume (108) inside the bell (108a), which air pump (134) by a shifting valve means ((128,130) further generates air flow into a floating closure (152) for closing the opening of the bell (108a).

8. System (2,102) according to claim 7, **characterized in that** the system comprises a water pump (144) for generating fresh water circulation in the bell (108a) which water pump (144) further collect air bubbles in the fresh water volume (108) and generates a stream of air bubbles in the upper part of the fresh water sub volume (108).

9. System (2,102) according to claim 8, **characterized in that** the system (102) comprises means for collecting exterior parasites at the water surface in the bell (108a) and for removing collected exterior parasites through a tube (137).

10. Method for removing exterior parasites from fish, such as salmon lice from fish in fish farms where the fish are kept in a closed volume as disclosed in the claims 1-9, **characterized in** comprising at least the following activities:
a. prepare a fresh water sub volume (8,108),
b. let fish (4) swim into a volume of fresh water volume (8,108),
c. feed the fish in the fresh water volume (8,108),
d. generate an air stream towards an air inlet for generating air bubbles in the fresh water volume (8,108),
e. remove parasites from the fresh water sub volume (8,108).

11. Fish feeding system (2,102) for fish farms, which system (2,102) comprises one or more, more or less closed volumes or pools of seawater (6,106), where fish (4) are kept inside by boundaries, such as nets surrounding the volumes (6,106), **characterized in, that** the closed volume (6,106) comprises a sub volume of water (8,108), which water sub volume (8,108) is connected to a supply of water (10) creating a current of water through the sub volume (8, 108) which water sub volume (8,108) has an access opening for fish to swim into the water sub volume (8,108) and further comprises means for adding fish feed to the water current in the water sub volume (8, 108).

12. Fish feeding system (2,102) according to claim 11, **characterized in that** feeding is performed in fresh water in the water sub volume (8,108).

13. System (2,102) according to claim 11 or 12, **characterized in that** the water sub volume (8,108) is provided inside dome or a bell shaped compartment (8a), which bell (8a) is open downwards, which bell (8a) comprises water, preferably fresh water, which is delivered from a water source (20).

14. System according to claim 13, **characterized in that** the bell (8a) is connected to a tube (22), which tube (22) has an inlet and an outlet inside the bell (8a), which tube (22) comprises an inlet for fresh water (20).

15. Method for feeding fish, such as salmon, in fish farms where the fish are kept in a closed volume as disclosed in the claims 1-10 or 11-13,
**characterized in** comprising at least the following activities:
a. prepare a water sub volume (8,108), preferably a fresh water sub volume, (8,108)
b. generate a water current in the water sub volume (8,108), which is sufficiently strong to keep fish feed suspended in the water sub volume (8, 108)
c. feed the fish feed into the water current in the water sub volume (8, 108),
d. let fish (4) swim into the sub water volume (8,108), and thus
e. feeding the fish in the water sub volume (8,108)
f. remove parasites from the fresh water sub volume (8,108).
